# EUROPÄISCHE PATENTSCHRIFT

(11) **EP 2 825 337 B1**
(45) Veröffentlichungstag und Bekanntmachung des Hinweises auf die Patenterteilung: **20.04.2016**
(21) Anmeldenummer: 13718094.9
(22) Anmeldetag: 11.03.2013
(51) Int. Cl.: B22C 9/02, B22C 9/06, B22D 33/04, G01B 11/00, B29C 45/84

(54) **VERFAHREN ZUR POSITIONIERUNG UND FIXIERUNG VON FORMTEILEN IN GIESSFORMEN**
METHOD FOR POSITIONING AND FIXING MOULD PARTS IN CASTING MOULDS
PROCÉDÉ SERVANT À POSITIONNER ET À FIXER DES PIÈCES MOULÉES DANS DES MOULES DE COULÉE

(30) Priorität: 12.03.2012 DE 102012102047
(43) Veröffentlichungstag der Anmeldung: 21.01.2015
(73) Patentinhaber: ACTech GmbH, 09599 Freiberg (DE)
(72) Erfinder: HINTZE, Heike, 09661 Hainichen (DE); KNOCH, Andreas, 09599 Freiberg (DE)
(74) Vertreter: Rothe, Silke
(86) Internationale Anmeldenummer: PCT/DE2013/100090
(87) Internationale Veröffentlichungsnummer: WO 2013/135236

(56) Entgegenhaltungen:
- DE-A1- 10 156 332
- DE-A1- 19 535 337
- JP-A- 2004 205 478
- JP-A- 2007 307 580
- JP-A- 2007 333 462
- JP-A- 2008 287 468
- US-A1- 2004 211 543
- "BAXI FOUNDRY AUTOMATE DISAMATIC MOULD INSPECTION", FOUNDRY TRADE JOURNAL, INSTITUTE OF CAST METALS ENGINEERS, WEST BROMWICH, GB, Bd. 158, Nr. 3305, 9. Mai 1985 (1985-05-09), Seite 376, XP002028894, ISSN: 0015-9042
- "CHAPTER 5: Sand Casting Dimensional Control ED - Wanlong Wang; Herny W Stoll; James G Conley", 1. Januar 2010 (2010-01-01), RAPID TOOLING GUIDELINES FOR SAND CASTING, SPRINGER, PAGE(S) 69 - 98, XP009170585, ISBN: 978-1-4419-5730-6 das ganze Dokument

## Beschreibung

Für die Herstellung von Gussteilen werden oftmals Gießformen verwendet, bei denen mehrere Formteile zu einer kompletten Form zusammengesetzt werden. Eine derartige mehrteilige Form kann aus Unterkasten, Oberkasten, Seitenteilen, Außenkernen, Innenkernen, Kühleisen, Speisern und weiteren Teilen bestehen, die im Rahmen der vorliegenden Beschreibung mit dem Oberbegriff "Formteil" bezeichnet werden.

Derartige Gießformen sind bereits in verschiedenartigen Ausführungen bekannt. Beispielsweise beschreibt DE 20 2004 020 207 U1 eine Einrichtung zum Gießen von Leichtmetallgussteilen, die aus mehreren Segmenten zusammengefügt ist und insbesondere Details zum Positionieren unterschiedlicher Speiser umfasst.

Aus DE 10 2006 055 988 A1 ist eine Gießform bekannt, die mehrere teleskopartig ineinander angeordnete Baugruppen umfasst, mit denen unterschiedliche Kasten- und somit Formkonturen gebildet werden können.

DE 10 2010 003 824 A1 betrifft einen Gießereiformkasten, der mindestens einen Unterkasten und einen Oberkasten umfasst, wobei diese Druckschrift insbesondere Mittel zum Verspannen der beiden Kästen miteinander vorschlägt.

DE 103 42 147 A1 beschreibt ein Verfahren zum automatischen Berechnen einer Verformungen kompensierenden Geometrie des Formhohlraumes einer Spritzgießform.

In DE 10 2007 050 316 A1 wird eine Spritzgießform beschrieben, welche Vorhalteflächen enthält, die für eine Korrektur der beim Abguss auftretenden Geometrieabweichungen genutzt werden.

Unabhängig von der jeweils konkreten Ausführung müssen die separaten Formteile zunächst zueinander positioniert werden, um die Geometrie des zu erzeugenden Gussteils im Hohlraum maßhaltig abzubilden. Weiterhin müssen die Formteile auch fixiert werden, damit die erzielte Positionierung bis zum Abguss erhalten bleibt.

Es ist allgemein bekannt, dass eine Positionierung der Formteile durch starre Führungen erfolgt. Derartige starre Führungen werden überwiegend konstruiert und in das jeweilige Formteil als Anlagefläche, Erhebung oder Vertiefung hineingearbeitet, wobei diese Konturen als Kernmarke bezeichnet werden. Die Form- und Maßtoleranzen dieser Kernmarken sowie die Lagetoleranz zwischen der Bauteilgeometrie und den Kernmarken in den einzelnen Formteilen bestimmen letztlich die Genauigkeit der formgebenden Bauteilgeometrie in der zusammengebauten Form.

Die Positionierung der Formteile zueinander kann verschiedenartig erfolgen, zum Beispiel durch weitgehend genaue Kernmarken. Bei Notwendigkeit sind auch Nachbearbeitungen an den Kernmarken möglich. Ebenso können Kernstützen genutzt werden, mit denen die Formteile in die angestrebte Lage gedrückt werden, um beispielsweise geforderte Mindestwandstärken zu gewährleisten. Weiterhin können Spannelemente verwendet werden, welche die Formteile in eine geforderte Position drücken. Beim Positionieren wird die Lage der Formteile zueinander durch optische oder taktile Messgeräte oder auch mit Hilfsmitteln wie Wandstärkeprüfer oder Wandstärkelehre geprüft. Diese Prüfungen erfolgen, indem durch Messen konkrete Messwerte ermittelt werden oder indem mittels Lehren eine Entscheidung "in Ordnung / nicht in Ordnung" herbeigeführt wird.

Die Fixierung der Formteile erfolgt durch die Kernmarken und das Eigengewicht und bei Bedarf durch zusätzliche Lasteisen. Die Formteile werden auch durch Formkästen und Verriegelungen fixiert. Eine Fixierung durch Spannelemente ist ebenfalls gebräuchlich. Unabhängig von der jeweils konkreten Ausgestaltung sind stets nicht zur formgebenden Geometrie gehörende Außenflächen bzw. Trennflächen zwischen den Formteilen mit Kraft- oder Formschluss an der Fixierung beteiligt. Als formgebende Geometrie werden die Bereiche der Formteile bezeichnet, die einen Teil der späteren Gussteilgeometrie ausbilden. Die Summe der formgebenden Geometrien aller zu einer Form gehörenden Formteile ergibt die komplette Geometrie des Hohlraumes, der das spätere Gussteil ausbildet.

Die aus mehreren Formteilen zusammengefügten Gießformen und die für deren Positionierung und Fixierung bekannten Verfahren haben sich grundsätzlich bewährt. Dennoch besteht weiterhin Entwicklungsbedarf, um insbesondere durch Nutzung von inzwischen verfügbaren neuen technischen Lösungen noch bestehende Mängel zu überwinden. Nachfolgend werden einige diesbezügliche Ansatzpunkte erläutert:

Die Formkonstruktion erfolgt mittels CAD-System. Damit liegen CAD-Datensätze der kompletten Form und aller Formteile vor. Das ist eine Voraussetzung für die Nutzung moderner Fertigungstechnologien.

Des Weiteren kann durch moderne Messmethoden die Position der Formteile im Verbund der in Aufbau befindlichen Form deutlich genauer geprüft werden als bei einer mit Kernmarken erreichten Positioniergenauigkeit. Durch die geometrisch starren Kernmarken sind Korrekturen bezüglich der Position der Formteile nicht ohne weiteres möglich. Wird eine Fehlstellung durch Prüfen festgestellt, müssen die Formteile nachgearbeitet oder die Fehlstellung akzeptiert oder die Form als Ausschuss verworfen werden.

Sofern die Formteile beispielsweise durch Kernstützen in die geforderte Lage gedrückt werden, erfordert dies einen erhöhten Montageaufwand und zusätzliche Kosten für die Kernstützen. Dabei können unerwünschte Spannungen in den Formteilen auftreten, die einen Bruch des Formteiles auslösen können. Die Kernstützen verbleiben außerdem im Gussteil, sie sind nicht wiederverwendbar und können Undichtigkeiten und/oder eine Kerbwirkung im Gussteil verursachen.

Falls die Lage der Formteile durch Spannelemente korrigiert wird, erhöhen sich ebenfalls der notwendige Montageaufwand und die Kosten. Auch die Spannelemente können unerwünschte Spannungen in den Formteilen verursachen, die zum Bruch dieser Formteile führen können. Außerdem müssen die Spannelemente an der Form bis nach der Erstarrung des Gussteils verbleiben, so dass in Abhängigkeit der Taktzeit eine relativ große Anzahl an Spannelementen benötigt wird. Ferner müssen die Spannelemente beim Auspacken der Gussteile entnommen werden, wodurch sich der Arbeitsaufwand nochmals erhöht.

Sofern die Formteile mit Spannelementen fixiert werden, können die Formteile bei ungünstigen Bedingungen durch die auftretenden Spannkräfte in eine unerwünschte Lage innerhalb der Form gedrückt werden, ohne dass dieser Fehler zwangsläufig bemerkt wird.

Falls die Lage der Formteile durch nachträgliche Bearbeitungen wie Abreiben der Kernmarken oder durch Zwischenlagen im Kernspalt korrigiert wird, sind überwiegend arbeitsaufwändige und kaum automatisierbare Verfahrensschritte notwendig.

Die Kernmarken können an sich durch eine Modelländerung optimiert werden. Das ist jedoch kostenintensiv und die Kernmarken am Modell verschleißen im Gebrauch wieder. Zwar können die Kernmarken am Modell aus sehr verschleißfesten Werkstoffen (z. B. Stahl) hergestellt und mit CNC-Maschinen sehr präzise gefertigt werden. Die von einem solchen Modell abgeformten Formteile erreichen dennoch nicht die Genauigkeit moderner Manipulatoren und Prüfmethoden, weil diese Formteile während des Aushärtens, der Lagerung und der Verarbeitung Form- und Maßänderungen unterliegen.

Die formgebende Geometrie kann mit optischen oder taktilen Messverfahren geprüft werden, allerdings nur an der offenen Form. Demzufolge ist zumindest die Lage der formgebenden Geometrie des letzten, die Form schließenden Formelements nicht mit derartigen optischen oder taktilen Messverfahren messbar, es sei denn, eine kostenintensive Computertomographie wird eingesetzt. Dies gilt ebenso für verwinkelte, komplizierte und tiefliegende formgebende Geometrien.

Aus DE 10156332A ist schließlich ein Verfahren und ein Baukartensystem für die schnelle Herstellung von Gießformen unter verwerdung von CAD-Daten bekannt.

Aufgabe der Erfindung ist, ein Verfahren zu schaffen, mit dem ein Formteil für eine Gießform exakt positioniert und auf einfache Art und Weise in seiner Lage fixiert werden kann. Dabei soll erreicht werden, dass die formgebende Geometrie der einzelnen Formteile einer mehrteiligen Gießform weitgehend exakt zur Soll-Geometrie gemäß CAD-Datensatz ausgerichtet wird. Weiterhin soll die Ist-Lage der formgebenden Geometrie der komplett aufgebauten Form ermittelt werden, um auf Grundlage dieser Daten eine Bewertung der Maßhaltigkeit des herzustellenden Gussteiles zu ermöglichen.

Die Aufgabe wird mit den Merkmalen gemäß Patentanspruch 1 und 8 gelöst. Vorteilhafte Ausgestaltungen sind jeweils Gegenstand von Unteransprüchen, die im Ausführungsbeispiel näher erläutert werden.

Der grundlegende Lösungsansatz besteht darin, dass durch Abgleich der Formteilgeometrie mit dem vorgegebenen CAD-Datensatz und Füllen von formteilübergreifenden Aussparungen eine Positionierung und Fixierung der Formteile einer mehrteiligen Gießform realisiert wird. Dabei wird die Form mit Aussparungen versehen, die formteilübergreifend ausgestaltet sind. Eine Aussparung in der Form wird also durch Aussparungen in mehreren separaten Formteilen gebildet. Diese Aussparungen werden so gestaltet, dass sie im jeweils relevanten Montageschritt von außen zugänglich sind.

Beim Verfahrensablauf wird das Formteil in seine Soll-Position gemäß CAD-Datensatz gehalten. Dabei wird die aktuelle Ist-Position gemessen und bis zur geforderten Genauigkeit korrigiert. Nachdem das Formteil genau positioniert ist, werden die Aussparungen zunächst mit Formstoff gefüllt. Sobald der Formstoff ausgehärtet ist, muss das Formteil nicht mehr gehalten werden, weil es nunmehr durch den die Aussparungen ausfüllenden Formstoff gegenüber den weiteren Formteilen in der optimalen Position fixiert ist.

Eine spezielle Ausgestaltung ist beim Zulegen der Form vorgesehen. Hierfür wird vorzugsweise ein optisches Messsystem verwendet, mit dem die Ist-Geometrie des Formteils einschließlich der Außenflächen gemessen wird. Danach kann die innen liegende formgebende Geometrie eines Formteils ausgerichtet werden, indem die Position der Außenflächen geprüft wird. Demzufolge ist auch beim letzten Formteil, welches die Form schließt und somit die formgebende Geometrie umschließt und damit unzugänglich macht, eine Ausrichtung der formgebenden Geometrie nach der Soll-Geometrie gemäß CAD-Datensatz möglich. Das Messen der gesamten Formteilgeometrie kann auch für mehrere oder alle Formteile angewendet werden.

Das erfindungsgemäße Verfahren weist zahlreiche Vorteile gegenüber den bisher üblichen technischen Lösungen auf, die nachfolgend erläutert werden.

Ein wesentlicher Vorteil ist, dass ein Formteil, welches immer auch eine gewisse Abweichung in seiner formgebenden Geometrie aufweist, ohne vorgegebene geometrische Zwänge durch Kernmarken so positioniert werden kann, dass die formgebende Geometrie optimal gegenüber den formgebenden Geometrien der schon montierten Formteile ausgerichtet ist. Somit können die vorhandenen Abweichungen ausgemittelt werden, es wird also eine sogenannte Best-Fit-Einpassung realisiert. Eine verbleibende Geometrieabweichung der Formhohtraum-Ist-Geometrie gegenüber den vorgegebenen CAD Daten wird somit minimiert.

Eine Nacharbeit an den Kernmarken zur Verbesserung der Lage der Formteile kann entfallen und da für zahlreiche Ausführungen keine Kernmarken mehr notwendig sind, kann auch die Formkonstruktion (CAD) vereinfacht werden. Auch Modelle und Formteile vereinfachen sich.

Die Ist-Position der formgebenden Geometrie der Formelemente wird erfasst. Dadurch entsteht im Computer ein Modell der zusammengelegten Form. An diesem Modell kann die Geometrie des Formhohlraumes einfach geprüft werden, was ansonsten bei der geschlossenen Form nur mit aufwändiger Computertomographie möglich wäre. Fehlerhafte Formen können somit schnell, also auch schon vor dem Abguss, ausgesondert werden. Dadurch wird eine höhere Genauigkeit erreicht und die Ausschussquote an Gussteilen erheblich gesenkt.

Ein weiterer Vorteil besteht darin, dass die Abweichung nur über die formgebende Geometrie immer kleiner ist als über das gesamte Formteil. Beim vorgeschlagenen Verfahren erfolgt keine Positionsbestimmung durch Kernmarken, so dass keine Ungenauigkeiten durch Maß- und Lageabweichungen zwischen der formgebenden Geometrie und übrigen Bereichen des Formteils (z. B. Kernmarken) entstehen.

Weiterhin treten beim vorgeschlagenen Verfahren keine Fehlerfortpflanzung, Fehlersummation und Fehlerverstärkung durch ungünstige Winkelbeziehungen und Hebelverhältnisse auf. Dabei ist insbesondere bei einer Montage von Gießformen aus zahlreichen Formteilen die genauere Positionierung durch vermiedene Fehlerfortpflanzung besonders deutlich, da hier jedes einzelne Formteil gegenüber der Soll-Geometrie gemäß CAD-Datensatz ausgerichtet werden kann.

Vorhandene Geometriefehler in den Trennflächen zwischen benachbarten Formteilen können besser ausgeglichen werden, weil diese Trennflächen nicht mehr für die Positionierung und Fixierung maßgeblich sind.

Die Genauigkeit der Position der formgebenden Geometrie wird bei diesem Verfahren lediglich durch die Genauigkeit der Bewegung der eingesetzten Hilfsmittel sowie die Genauigkeit der Prüfgeräte zur Geometrieerfassung begrenzt. Dadurch lassen sich die Formteile sehr genau positionieren.

Die Formteile einer verfahrensgemäß aufgebauten Form sind keiner mechanischen Belastung durch Verspannung infolge überbestimmter eng tolerierter Kernmarken ausgesetzt. Demzufolge sind die Formteile nach erfolgter Montage fast spannungsfrei, wodurch sich die Stabilität der Form verbessert. Ebenso wird das Bruchrisiko für ein Formteil durch den sonst üblichen Einsatz von Spannelementen und durch eine Belastung mit Auflagen verringert.

Die Fixierung der Formteile durch den in Aussparungen eingefüllten und danach aushärtenden Formstoff bewirkt eine spannungsfreie Fixierung und verhindert das Verrutschen von Formteilen durch einwirkende Kräfte.

Weiterhin weisen die Formteile einer verfahrensgemäß aufgebauten Form kein Spiel infolge lose tolerierter Kernmarken auf. Diese spielfreie Lagefixierung erhöht die Genauigkeit sowie die Steifigkeit der Form und verringert gleichzeitig eine Verformung in der Form beim Übergang von der Belastung durch das Eigengewicht der Formteile in der leeren Form zu der Belastung durch den Auftrieb in der gefüllten Form.

Sofern Spannelemente verwendet werden, können diese direkt nach dem Aushärten des in die formteilübergreifenden Aussparungen eingefüllten Formstoffes wieder entfernt werden. Folglich gelangen diese Spannelemente nicht in die Gießstrecke und zum Auspacken. Vielmehr können die Spannelemente direkt im Formzusammenbau mit wenig Aufwand entnommen werden und stehen dadurch sofort wieder zur Verfügung. Da keine Kernmarken die Lage der Formteile vorbestimmen, entstehen durch die Positionierung der Formteile mittels Spannelementen keine Verspannungen.

Nachfolgend wird ein Ausführungsbeispiel der Erfindung unter Hinweis auf die Zeichnung beschrieben. Es zeigen:
- Fig. 1a: eine erste aus mehreren separaten Formteilen zusammengefügte Gießform
- Fig. 1b: die Formteile der Gießform gemäß Fig. 1a als separate Einzelteile
- Fig. 1c: die Formteile gemäß Fig. 1b in einer teilweise vormontierten Anordnung
- Fig. 2: eine zweite aus mehreren separaten Formteilen zusammengefügte Gießform mit zugeordneter Messtechnik und zugeordnetem Manipulator
- Fig. 3: verschiedene Ansichten zur Wirkverbindung von Gießform und Messtechnik
- Fig. 4a: eine dritte aus mehreren separaten Formteilen zusammengefügte Gießform
- Fig. 4b: die Gießform gemäß Fig. 4a mit einem zusätzlichen Seitenteil als Verschluss

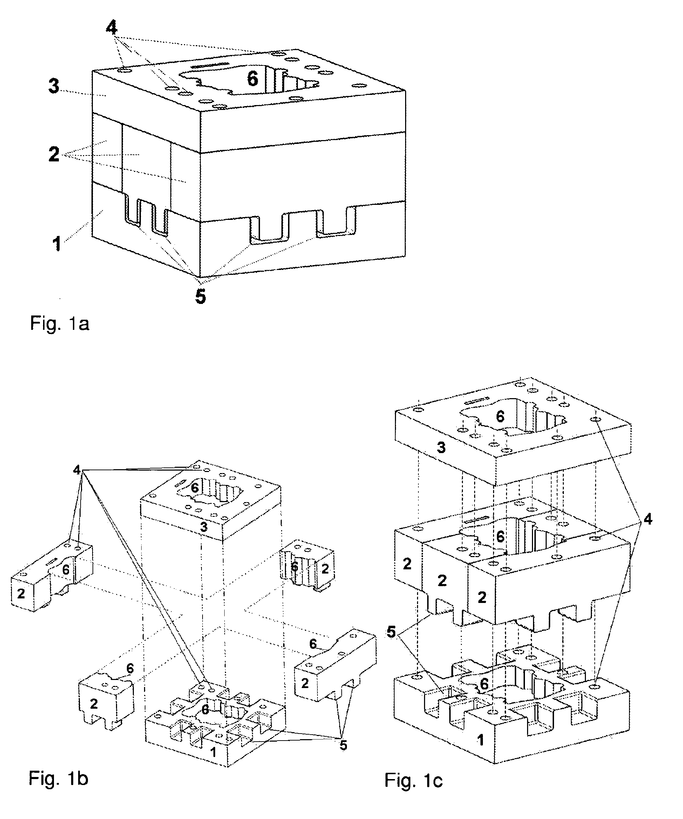

Fig. 1 a zeigt eine Gießform, die aus einem Unterkasten 1, mehreren Seitenteilen 2 und einem Oberkasten 3 zusammengefügt ist. In diesen Bauteilen sind durchgehende Aussparungen 4 vorgesehen, die hier als Bohrungen ausgestaltet sind. Weiterhin sind im Übergangsbereich zwischen dem Unterkasten 1 und den Seitenteilen 2 mehrere Führungen 5 vorgesehen, die mit Spiel ausgeführt sind. Hingegen sind beim hier gezeigten Ausführungsbeispiel zwischen den Seitenteilen 2 und dem Oberkasten 3 keine derartigen Führungen 5 vorgesehen. Die konkrete Formteilung kann in Form einer Geradführung, einer Ebene, eines Zylindermantelflächenausschnitts, eines Kegelausschnitts, eines Kugelausschnitts oder einer anderen Geometrie mit mindestens einem geometrischen Freiheitsgrad realisiert werden.

Aus Fig. 1b und Fig. 1c ist ersichtlich, dass der Unterkasten 1, die Seitenteile 2 und der Oberkasten 3 jeweils einen Abschnitt mit formgebender Ist-Geometrie 6 aufweisen. Diese formgebenden Ist-Geometrien 6 bilden in der zusammengesetzten Form (Fig. 1a) den Hohlraum, in dem die Schmelze zu einem Gussteil erstarrt. Die Geometrie dieses Hohlraumes bestimmt die Genauigkeit des späteren Gussteils und soll möglichst genau hergestellt werden. Dazu müssen die einzelnen Ist-Geometriebereiche 6 zueinander möglichst genau positioniert werden.

Beim Aufbau einer Form wird typischer Weise mit einem Unterkasten 1 begonnen. Der Unterkasten 1 wird vorzugsweise als Bezugssystem derart genutzt, dass die formgebende Ist-Geometrie 6 durch eine Koordinatentransformation (in den drei Raumrichtungen und den drei Raumwinkeln) so verlagert wird, dass diese formgebende Ist-Geometrie 6 bestmöglich in die Soll-Geometrie 7 gemäß CAD-Datensatz des Unterkastens 1 eingepasst ist. Alternativ kann auch die Soll-Geometrie 7 gemäß CAD-Datensatz des Unterkastens 1 nach der formgebenden Ist-Geometrie 6 ausgerichtet werden. Hinterher bleiben Soll-Geometrie 7 und formgebende Ist-Geometrie 6 des Unterkastens 1 zueinander unverändert. Die bestmögliche Einpassung ist dadurch gekennzeichnet, dass das Fehlermaß aus der Abweichung zwischen Ist-Geometrie 6 und Soll-Geometrie 7 ausgewählter Flächen, hier typischerweise die gesamte formgebende Geometrie 6 eines Formteiles 1, 2 oder 3, minimal wird. Bei einer Koordinatentransformation der Soll-Geometrie 7 ist die Genauigkeit, mit der das Minimum des Fehlers erreicht wird, nur von der Numerik des verwendeten Algorithmus und des Computers und von der Rechenzeit abhängig. Bei der Ausrichtung eines Formteiles nach der Soll-Geometrie gemäß CAD-Datensatz ist die Genauigkeit, mit der das Minimum des Fehlers erreicht wird, auch von der Handhabung des Formteiles und von der Anzahl der Messungen und Korrekturen abhängig. Wenn der Vorgang des Ausrichtens nach Einhaltung einer vorgegebenen Toleranz abgebrochen wird, bevor das Minimum des Fehlers eingestellt ist, wird die Ausrichtung als anforderungsgerecht bezeichnet.

Nachdem Unterkasten 1 und Soll-Geometrie 7 ausgerichtet worden sind, wird das erste Seitenteil 2 in die Nähe seiner Soll-Position gehalten. Dabei sind die mit Spiel ausgeführten Führungen 5 hilfreich. Die Ist-Position des Seitenteils 2 wird geprüft und das Seitenteil 2 wird so in den drei Raumrichtungen und den drei Raumwinkeln verlagert, dass seine formgebende Ist-Geometrie 6 bestmöglich in die Soll-Geometrie 7 eingepasst ist. Dies kann beispielsweise durch einen Roboter/Manipulator 10, mit Spannelementen oder von Hand erfolgen, wobei letztgenannte Elemente in der Zeichnung nicht näher dargestellt sind.

Sobald die formgebende Ist-Geometrie 6 des Seitenteils 2 mit der jeweils geforderten Genauigkeit positioniert ist, werden die Aussparungen 4 mit Formstoff 8 gefüllt. Nachdem dieser Formstoff 8 ausgehärtet ist, ist das Seitenteil 2 gegenüber dem Unterkasten 1 fixiert und kann losgelassen werden. Ebenso können nunmehr eventuell eingesetzte Spannelemente abgenommen werden. Danach wird das nächste Formteil - ein weiteres Seitenteil 2 bzw. der Oberkasten 3 - in die Nähe seiner Soll-Position gehalten und der Vorgang des Positionierens und Fixierens wird wiederholt, bis die Form komplett aufgebaut ist. Sind mehrere Formteile gleichzeitig zugänglich, können diese auch gleichzeitig positioniert und fixiert werden.

Beim Ausführungsbeispiel nach Fig. 1a bis Fig. 1c sind die Aussparungen 4 als durchgehende Bohrungen ausgestaltet, die durch mehrere Formteile gehen. Falls diese Bohrungen nach dem Ausrichten der Formteile nicht genau übereinander stehen, ergeben sich keine Probleme, weil der Formstoff auch in etwas zueinander versetzte Bohrungen eingefüllt werden kann und diese versetzten Bohrungen ohne Spiel komplett füllt. Somit ist nach dem Aushärten des Formstoffs die Lage der Formteile fixiert.

Unabhängig von der jeweils konkreten Ausgestaltung der Aussparungen 4 werden diese in der gleichen Weise in den Formteilen abgebildet, wie die formgebende Geometrie. Dies erfolgt beispielsweise durch Abformen, Formstoff-Fräsen, Lasersintern oder Formstoff-Printen. Die Aussparungen 4 werden vor oder während des Ausrichtens des Formteils mit Formstoff gefüllt, wobei für die Ausrichtung die Verdichtbarkeit des Formstoffs mit ausgenutzt wird.

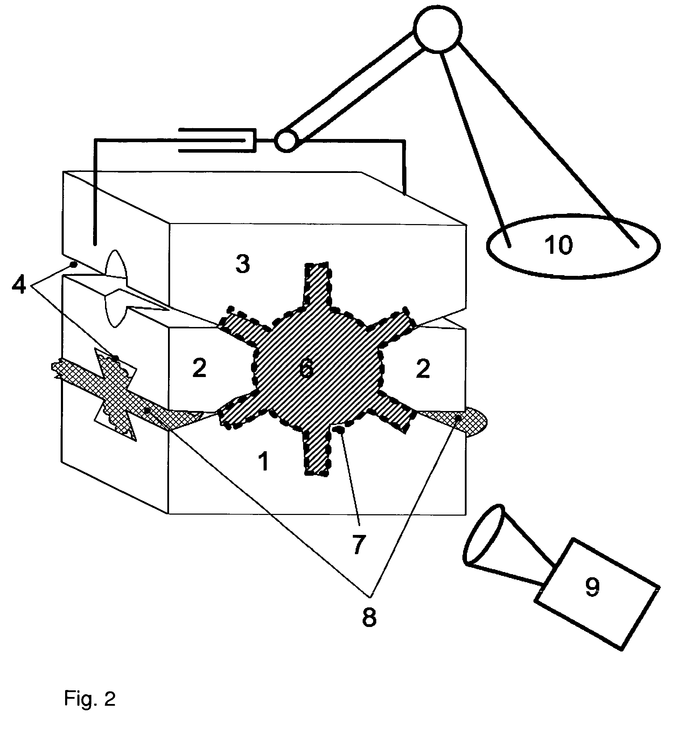

Fig. 2 zeigt eine Ausführung, bei der die Aussparungen 4 in der Formteilung vorgesehen und mit einem Hinterschnitt ausgestaltet sind. Hierbei ist eine Variante dargestellt, bei der die Soll-Geometrie 7 nach dem Unterkasten 1 ausgerichtet worden ist. Die Seitenteile 2 sind nach der Soll-Geometrie 7 ausgerichtet und durch Formstoff 8 in den unteren Aussparungen 4 fixiert worden. Der Oberkasten 3 wird mit einem Roboter / Manipulator 10 nach der Soll-Geometrie 7 ausgerichtet.

Sobald mit einem Messgerät 9 die korrekte Lage des Oberkastens 3 - also eine Position, bei der die formgebende Ist-Geometrie 6 des Oberkastens 3 mit der Soll-Geometrie 7 weitgehend übereinstimmt - festgestellt wird, werden die oberen Aussparungen 4 zwischen den Seitenteilen 2 und dem Oberkasten 3 mit Formstoff 8 ausgefüllt und der Roboter / Manipulator 10 lässt den Oberkasten 3 nach dem Aushärten des Formstoffs 8 los.

Eine weitere Ausführungsvariante sieht die Verwendung eines Füllrahmens vor, der um die Form herum aufgebaut wird, so dass sich die Aussparungen 4 aus dem Zwischenraum zwischen Füllrahmen und Außengeometrie 11 der Form ergeben.

Die Formteilungen können ausgehend von der formgebenden Ist-Geometrie 6 keilförmig erweitert ausgestaltet werden. Weiterhin können in keilförmigen Formteilungen oder auch in Kernmarken mit keilförmigem Spiel Zwischenlagen zur Positionierung der Formteile eingesetzt werden, wobei diese Zwischenlagen vorzugsweise ebenfalls keilförmige Konturen aufweisen.

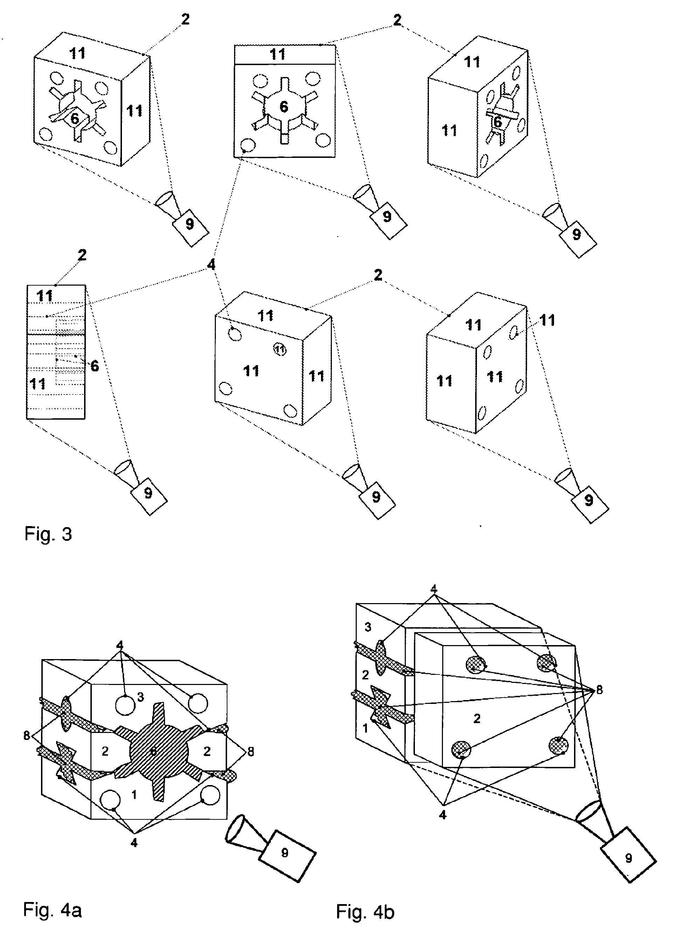

Eine weitere Ausführungsvariante sieht vor, dass ein Seitenteil 2 den durch die formgebende Ist-Geometrie 6 gebildeten Formhohlraum schließt. Gemäß Fig. 3 wird dabei die Ist-Geometrie 6 des Seitenteils 2 mit einem Messgerät 9 geprüft, so dass die Lage der formgebenden Ist-Geometrie 6 aus der Lage der Außengeometrie 11 des Seitenteils 2 bestimmt werden kann.

Als Messgerät 9 wird ein Gerät zur optischen Geometrieerfassung eingesetzt, zum Beispiel ein Streifenlichtprojektor, ein Laserscanner oder ein Computertomograph. Die optimale Einpassung von Soll- und Ist-Geometrie 6 und 7 ist durch eine ständige Prüfung während des Formzusammenbaus bekannt, siehe hierzu Fig. 4a.

Nachdem die Form durch das Seitenteil 2 geschlossen wurde, wird dieses Seitenteil 2 durch eine Messung der Außengeometrie 11 so positioniert, dass seine formgebende Ist-Geometrie 6 bestmöglich in die Soll-Geometrie 7 eingepasst ist, siehe hierzu Fig. 4b. Die verschiedenen Geometrien, Positionen und Lagebeziehungen werden dabei computertechnisch gespeichert, verglichen und dargestellt, wobei Abweichungen zur Soll-Geometrie sowohl als Farbdarstellung als auch Zahlenwerte angezeigt werden können. Außerdem werden die Einpassung, die Ist-Position und notwendige Korrekturbewegungen berechnet. Dabei erfolgt die Korrektur der Ist-Lage durch Verdrehen und/oder Verschieben des Formteils, entweder manuell entsprechend der vom Computer angezeigten Korrekturwerte oder alternativ durch einen Manipulator oder Roboter entsprechend der übertragenen Korrekturwerte.

In weiterer Ausgestaltung ist es möglich, dass die Ist-Geometrie der Formteile vor oder während der Formmontage und die Ist-Lage der Formteile während oder nach der Formmontage geprüft werden. Dabei kann aus den ebenfalls geprüften formgebenden Geometrien der Formteile ein Modell des Ist-Formhohlraumes berechnet werden, das zur Beurteilung der Positionierung der Formteile verwendet wird.

Ein derartiges Modell des Ist-Formhohlraumes wird zum Beispiel mit einem Computer berechnet, indem aus den von außen zugänglichen Flächen der Formelemente über die gemessene Ist-Geometrie der Formteile die Ist-Lage der formgebenden Geometrien berechnet wird. Aus den formgebenden Geometrien der einzelnen Formelemente, in ihrer jeweiligen gemessenen und/oder berechneten Ist-Lage, wird ein Oberflächenmodell des Formhohlraumes berechnet. Dieses Oberflächenmodell des Formhohlraumes stellt unter Beachtung des Schwindmaßes ein Computermodell des zukünftigen Gussteils dar. An ihm können die geometrischen Merkmale des Rohteils, wie z. B. Wandstärken und die Lage von Hohlräumen schon vor dem Abguss geprüft werden. An dem Computermodell des Gussteils können sogar Oberflächen geprüft werden, die am realen Gussteil mit konventionellen Messverfahren nicht zugänglich sind.

Ebenso kann die Positionierung aller Formteile bewertet werden. Dies geschieht durch einen Vergleich der Formhohlraum-Soll-Geometrie entsprechend dem vorgegebenen CAD-Datensatz mit der Formhohlraum-Ist-Geometrie mittels eines Computerprogramms und einer Best-Fit-Einpassung der beiden Geometrien zueinander und mit einer Farbdarstellung der Abweichung der beiden Geometrien und/oder einer Angabe des Abstandswertes der jeweils einander entsprechenden Flächen.

### Bezugszeichenliste

- 1: Unterkasten
- 2: Seitenteile
- 3: Oberkasten
- 4: Aussparungen
- 5: Führungen
- 6: formgebende Ist-Geometrie
- 7: Soll-Geometrie gemäß CAD-Datensatz
- 8: Formstoff in Aussparung
- 9: Messgerät
- 10: Roboter / Manipulator
- 11: Außengeometrie

## Patentansprüche

1. Verfahren zur Positionierung und Fixierung von Formteilen in Gießformen, die mehrere, mindestens jedoch zwei separate Formteile aufweisen, **dadurch gekennzeichnet,**
**dass** zunächst die Ist-Geometrie und die Ist-Lage eines ersten Formteils gemessen und mit dem vorgegebenen CAD-Datensatz dieses Formteiles verglichen werden,
**dass** danach die Ist-Lage und die Soll-Lage dieses Formteils zueinander so korrigiert werden,
**dass** die formgebende Geometrie innerhalb vorgegebener Toleranzen in die Soll-Geometrie entsprechend dem vorgegebenen CAD-Datensatz eingepasst ist,
**dass** danach das Formteil in dieser Lage verbleibt, die nachfolgend als Bezugsbasis für eine Positionierung weiterer Formteile verwendet wird,
wobei für die weiteren Formteile ebenfalls die Ist-Geometrie und die Ist-Lage gemessen und mit dem vorgegebenen CAD-Datensatz verglichen werden und danach die jeweilige Ist-Lage so korrigiert wird, dass die formgebende Geometrie innerhalb vorgegebener Toleranzen in die Soll-Geometrie entsprechend CAD-Datensatz eingepasst ist und
**dass** die Formteile formteilübergreifende Aussparungen aufweisen, die mit benachbarten Formteilen in Wirkverbindung stehen, und die mit einem aushärtbaren Formstoff gefüllt werden, der danach aushärtet und damit die Formteile in der entsprechend dem vorgegebenen CAD-Datensatz korrigierten Position fixiert.

2. Verfahren nach Anspruch 1, **dadurch gekennzeichnet,**
**dass** die Ist-Geometrie und die Ist-Lage durch ein Gerät zur Geometrieerfassung und mittels eines Computers gemessen und dargestellt werden, wobei Abweichungen zur Soll-Geometrie entsprechend CAD-Datensatz als Farbdarstellungen und/oder als Zahlenwerte angezeigt und/oder als Steuerbefehle an einen Roboter oder Manipulator ausgegeben werden.

3. Verfahren nach Anspruch 1, **dadurch gekennzeichnet,**
**dass** zumindest ein für die Positionierung eines Formteiles ausgestalteter Geometriebereich an mindestens einem der in Wirkverbindung stehenden Formteile mit Spiel ausgeführt ist, das größer als die Toleranz des Formteiles ist.

4. Verfahren nach Anspruch 1, **dadurch gekennzeichnet,**
**dass** Formteilungen, definiert als Trennflächen zwischen benachbarten Formteilen, die Form einer Geradführung, einer Ebene, eines Zylindermantelflächenausschnitts, eines Kegelausschnitts, eines Kugelausschnitts oder einer anderen Geometrie mit mindestens einem geometrischen Freiheitsgrad hat.

5. Verfahren nach Anspruch 1, **dadurch gekennzeichnet,**
**dass** sich Formteilungen, definiert als Trennflächen zwischen benachbarten Formteilen, ausgehend von der formgebenden Geometrie keilförmig erweitern und wobei in diese Abschnitte Zwischenlagen zur Positionierung der Formteile einsetzbar sind.

6. Verfahren nach Anspruch 1, **dadurch gekennzeichnet,**
**dass** die Aussparungen (4) als Bohrungen ausgeführt werden, die mindestens zwei Formteile durchdringen.

7. Verfahren nach Anspruch 1, **dadurch gekennzeichnet,**
**dass** die Aussparungen (4) in Formteilungen, definiert als Trennflächen zwischen benachbarten Formteilen, angeordnet werden.

8. Verfahren nach Anspruch 1, **dadurch gekennzeichnet,**
**dass** die Aussparungen (4) durch die Außengeometrie (11) der Formteile in Kombination mit einem Füllrahmen ausgebildet werden.

9. Verfahren zur Ermittlung der Formhohlraum-Ist-Geometrie von Gießformen, die mehrere, mindestens jedoch zwei separate Formteile aufweisen, wobei die Ist-Geometrie der Formteile vor oder während der Formmontage sowie die Ist-Lage der Formteile während oder nach der Formmontage gemessen und mit einem vorgegebenen CAD-Datensatz verglichen werden,
wobei aus den erfassten formgebenden Geometrien der Formteile ein CAD-Modell des Ist-Formhohlraumes berechnet wird, welches zur Bewertung der Positionierung der Formteile innerhalb vorgegebener Toleranzen verwendet wird.

10. Verfahren nach Anspruch 9, **dadurch gekennzeichnet,**
**dass** das CAD-Modell des Ist-Formhohlraumes (6) mittels eines Computers berechnet wird, indem aus den von außen zugänglichen Flächen der Formelemente über die gemessene Ist-Geometrie der Formteile die Ist-Lage der formgebenden Geometrien berechnet wird und indem aus den einzelnen formgebenden Geometrien der einzelnen Formelemente in ihrer jeweils gemessenen und/oder berechneten Ist-Lage ein Oberflächenmodell des Formhohlraumes berechnet wird.

11. Verfahren nach Anspruch 9, **dadurch gekennzeichnet,**
**dass** die Bewertung der Positionierung durch einen Vergleich der Formhohlraum-Soll-Geometrie (7) mit der Formhohlraum-Ist-Geometrie (6) mittels eines Computerprogramms und einer Best-Fit-Einpassung oder einer auf den speziellen Anwendungsfall bezogenen Einpassung der beiden Geometrien zueinander und einer Farbdarstellung der Abweichung der beiden Geometrien und/oder einer Werteangabe des Abstandes der jeweils einander entsprechenden Flächen durchgeführt wird.

## Claims

1. A method for positioning and fixing mould parts in casting moulds comprising a plurality of, at least two, separate mould parts, **characterized in that**
first of all, the actual geometry and the actual position of a first mould part are measured and compared to the predefined CAD data set of said mould part,
then the actual position and the target position of said mould part relative to one another are corrected in such a manner that the moulding geometry is adjusted within predefined tolerances to the target geometry corresponding to the predefined CAD data set,
then the mould part remains in said position, which is subsequently used as the reference basis for positioning further mould parts,
wherein for further mould parts the actual geometry and the actual position are likewise measured and compared with the predefined CAD data set and then the respective actual position is corrected in such a manner that the moulding geometry is adjusted within predefined tolerances to the target geometry in accordance with the CAD data set, and
the mould parts have recesses provided in all mould parts, which are in operative connection with adjacent mould parts and which are filled with a curable moulding material which then cures and thus fixates the mould parts in the position corrected in accordance with the predefined CAD data set.

2. The method according to claim 1, **characterized in that**
the actual geometry and the actual position are measured and represented by a device for geometrical determination and by means of a computer, while deviations from the target geometry according to the CAD data set are shown as colour representations and/or as numerical values and/or output as control commands to a robot or manipulator.

3. The method according to claim 1, **characterized in that**
at least one geometrical region configured for the positioning of a mould part is configured on at least one of the mould parts in operative connection with a clearance which is larger than the tolerance of the mould part.

4. The method according to claim 1, **characterized in that**
mould partition lines, defined as cutting surfaces between adjacent mould parts, have the form of a straight-line guide, a plane, a segment of a cylindrical envelope surface, a conical section, a spherical section, or another geometry with at least one geometrical degree of freedom.

5. The method according to claim 1, **characterized in that**
mould partition lines, defined as cutting surfaces between adjacent mould parts, expand in the shape of a wedge starting from the moulding geometry, and inlays for the positioning of the mould parts can be inserted in these sections.

6. The method according to claim 1, **characterized in that**
the recesses (4) are configured as boreholes that pass through at least two mould parts.

7. The method according to claim 1, **characterized in that**
the recesses (4) are arranged in mould partition lines, defined as cutting surfaces between adjacent mould parts.

8. The method according to claim 1, **characterized in that**
the recesses (4) are formed by the exterior geometry (11) of the mould parts in combination with a filling frame.

9. A method for determining the actual mould cavity geometry of casting moulds, which comprise a plurality of, at least two, separate mould parts, wherein the actual geometry of the
mould parts before or during the mould assembly and the actual position of the mould parts during or after the mould assembly are measured and compared to a predefined CAD data set, and a CAD model of the actual mould cavity is calculated from the ascertained moulding geometries of the mould parts, which is used to assess the positioning of the mould parts within given tolerances.

10. The method according to claim 9, **characterized in that**
the CAD model of the actual mould cavity (6) is calculated by a computer, **in that** the actual position of the moulding geometries is calculated from the exterior accessible surfaces of the
mould elements via the measured actual geometry of the mould parts, and **in that** a surface model of the mould cavity is computed from the individual moulding geometries of the individual mould parts in their respective measured and/or calculated actual position.

11. The method according to claim 9, **characterized in that**
the assessment of the positioning is performed by comparing the target mould cavity geometry (7) and the actual mould cavity geometry (6) using a computer program and a best fit matching or a matching of the two geometries to each other in terms of the particular application and with a colour representation of the deviation of the two geometries and/or an indication of the values of the distance of the corresponding surfaces from each other.

## Revendications

1. Procédé servant à positionner et à fixer des pièces moulées dans des moules de coulée qui, elles, présentent plusieurs, mais au moins deux pièces moulées séparées **caractérisé en ce que** d'abord sont mesurées la géométrie et la position réelles d'une première pièce moulée afin de les comparer avec les données de référence CAO de cette pièce moulée,
après quoi la position réelle et la position de consigne de cette pièce moulée sont corrigées de telle sorte que la géométrie de façonnage soit ajustée, dans la plage des tolérances prescrites et en concordance avec les données de référence CAO, à la géométrie de consigne,
que la pièce moulée reste ensuite dans cette position qui servira par la suite de base de référence pour le positionnement d'autres pièces moulées,
où la géométrie réelle et la position réelle des autres pièces moulées sont également mesurées et adaptées aux données de référence CAO afin de corriger après la position réelle correspondante, ceci de telle sorte que la géométrie de façonnage soit ajustée, dans la plage des tolérances prescrites et en concordance avec les données de référence CAO, à la géométrie de consigne, et
que l'ensemble des pièces moulées présentent des évidements agissant en interaction avec les pièces moulées adjacentes, et que ces évidements sont remplis; d'un matériau de moulage à traitement thermique qui durcit par la suite, ce qui fait que les pièces moulées soient fixées dans la position qui correspond aux données de référence CAO.

2. Procédé suivant la revendication 1, **caractérisé en ce**
**que** la géométrie et la position réelles sont mesurées et affichées tant à l'aide d'un appareil servant à saisir les valeurs géométriques qu'au moyen d'un ordinateur, où les déviations par rapport à la géométrie de consigne y sont affichées, en concordance avec les données de référence CAO, en couleurs et/ou en tant que valeurs numériques, et/ou émises comme instructions de commande vers un robot ou manipulateur.

3. Procédé suivant la revendication 1, **caractérisé en ce**
**qu'**au moins une section géométrique conçue pour positionner des pièces moulées est munie, au moins sur une pièce moulée agissant en interaction avec les autres pièces moulées, d'un jeu mécanique qui, lui, est plus grand que la tolérance de la propre pièce moulée.

4. Procédé suivant la revendication 1, **caractérisé en ce**
**que** des joints de moule définis comme interfaces de jonction entre les pièces moulées adjacentes présentent la forme d'un guide-droite, d'un plan, d'un secteur surfacique d'un manteau de cylindre, d'un secteur sphérique ou d'une autre géométrie avec au moins un degré de liberté géométrique.

5. Procédé suivant la revendication 1, **caractérisé en ce**
**que** des joints de moule définis comme interfaces de jonction entre les pièces moulées adjacentes s'étendent sous forme d'un prisme triangulaire à partir de la géométrie de façonnage, et que des plis intérieurs peuvent être incorporés dans ces espaces afin d'assurer le positionnement des pièces moulées.

6. Procédé suivant la revendication 1, **caractérisé en ce**
**que** les évidements (4) sont des alésages qui percent au moins deux pièces moulées.

7. Procédé suivant la revendication 1, **caractérisé en ce**
**que** les évidements (4) sont disposés dans des joints de moule qui, eux, sont définis comme interfaces de jonction entre des pièces moulées adjacentes.

8. Procédé suivant la revendication 1, **caractérisé en ce**
**que** les évidements (4) sont combinés, dû à la géométrie extérieure (11) des pièces moulées, avec une trame de remplissage.

9. Procédé servant à déterminer la géométrie réelle de l'empreinte de moules de coulée qui, elles, présentent plusieurs, mais au moins deux pièces moulées séparées, où la géométrie réelle et la position réelle des pièces moulées sont mesurées puis comparées avec les données de référence CAO avant ou après le moulage, et où la position réelle des pièces moulées est mesurée puis comparée avec les données de référence CAO pendant et après le moulage, et où est calculé, sur la base des géométries de façonnage obtenues par la mesure des pièces moulées, un modèle CAO de l'empreinte réelle qui, lui, sert à évaluer le positionnement des pièces moulées dans la plage de tolérances prescrites.

10. Procédé suivant la revendication 9, **caractérisé en ce**
**que** le modèle CAO de l'empreinte réelle (6) est calculé à l'aide d'un ordinateur, ceci en déterminant la position réelle des géométries de façonnage à partir des surfaces des éléments de moule accessibles par l'extérieur et sur la base de la géométrie réelle des pièces moulées mesurées, ainsi qu'en obtenant, à partir de chaque position réelle mesurée et/ou calculée de toutes les géométries de façonnage et de tous les éléments de moule, un modèle de la surface de l'empreinte.

11. Procédé suivant la revendication 9, **caractérisé en ce**
**que** l'évaluation du positionnement est effectuée moyennant une comparaison de la géométrie de consigne de l'empreinte (7) avec la géométrie réelle de l'empreinte (6), ceci soit à l'aide d'un programme d'ordinateur et d'un ajustement optimal (best fit), soit par un ajustage qui se réfère au cas d'application présent des deux géométries avec affichage en couleurs des déviations entre les deux géométries et/ou avec affichage de l'écart entre chaque paire de surfaces correspondante.
